# EUROPÄISCHE PATENTSCHRIFT

(11) **EP 2 308 584 B1**
(45) Veröffentlichungstag und Bekanntmachung des Hinweises auf die Patenterteilung: **11.09.2013**
(21) Anmeldenummer: 10168695.4
(22) Anmeldetag: 07.07.2010
(51) Int. Cl.: B01D 53/26, G01N 5/02, G01N 15/08

(54) **Prüfverfahren für Trocknungsmittel**
Testing method for drying agent
Procédé de contrôle pour produit de séchage

(30) Priorität: 24.09.2009 DE 102009044993
(43) Veröffentlichungstag der Anmeldung: 13.04.2011
(73) Patentinhaber: Beko Technologies GmbH, 41468 Neuss (DE)
(72) Erfinder: Blauscheck, Herbert, 44357, Dortmund (DE)
(74) Vertreter: Bauer Vorberg Kayser Patentanwälte

(56) Entgegenhaltungen:
- GOULA ET AL: "Water sorption isotherms and glass transition temperature of spray dried tomato pulp", JOURNAL OF FOOD ENGINEERING, BARKING, ESSEX, GB, Bd. 85, Nr. 1, 27. September 2007 (2007-09-27), Seiten 73-83, XP022274372, ISSN: 0260-8774, DOI: DOI:10.1016/J.JFOODENG.2007.07.015
- LI ET AL: "Effects of pore sizes of porous silica gels on desorption activation energy of water vapour", APPLIED THERMAL ENGINEERING, PERGAMON, OXFORD, GB, Bd. 27, Nr. 5-6, 19. Dezember 2006 (2006-12-19), Seiten 869-876, XP005808778, ISSN: 1359-4311, DOI: DOI:10.1016/J.APPLTHERMALENG.2006.09.010
- HIROMITU NAONO, REIKO FUJIWARA AND MASAHIDE YAGI: "Determination of physisorbed and chemisorbed waters on silica gel and porous silica glass by means of desorption isotherms of water vapor", JOURNAL OF COLLOID AND INTERFACE SCIENCE, Bd. 76, Nr. 1, 1. Juli 1980 (1980-07-01), Seiten 74-82, XP002612911,
- W. KWAPINSKI, E. TSOTSAS: "Determination of Kinetics and Equilibria for Adsorption of Water Vapor on Single Zeolite Particles by a Magnetic Suspension Balance", CHEMICAL ENGINEERING & TECHNOLOGY, Bd. 27, Nr. 6, 1. Juni 2004 (2004-06-01), Seiten 681-686, XP002612912, DOI: 10.1002/ceat.200402033

## Beschreibung

Die Erfindung betrifft ein Verfahren zur Bewertung eines Trockenmittels, ein Verfahren zum Betrieb einer Trocknungsvorrichtung mit einem Trockenmittel, insbesondere für eine Druckluftanlage, wobei ein Zeitpunkt für einen Austausch des Trockenmittels anhand einer Leistungsfähigkeit des Trockenmittels bestimmt wird, sowie eine Prüfvorrichtung zur Durchführung eines Prüfprozesses an einer Probe eines Trockenmittels.

Zur Trocknung von Druckluft und Druckgasen sind Adsorptionstrockner bekannt, beispielsweise aus der Druckschrift DE 10 2006 022 293 A1. Der Adsorptionstrockner weist zwei Behälter auf, die mit Trockenmittel gefüllt sind und durch die abwechselnd das zu trocknende Gas geführt wird. Ist die Aufnahmefähigkeit des Trockenmittels in einem der Behälter im vorgesehenen Maß erschöpft, wird auf den zweiten Behälter umgeschaltet und das Trockenmittel im ersten Behälter wird regeneriert. Ein alternativer Aufbau für kleine Leistungen kann aus nur einem Behälter bestehen, der dann in Pausenzeiten regeneriert wird. Die Regeneration des erschöpften Trockenmittels erfolgt beispielsweise durch einen Teilstrom des getrockneten Gases aus dem aktiven Behälter. Alternativ wird Umgebungsluft genutzt, die aufgeheizt und durch das Trocknungsmittel geleitet wird, unterstützt durch Heizvorrichtungen in den Behältern.

Das Trocknungsmittel, typischerweise in Kornform mit zwei bis fünf Millimetern Durchmesser, z.B. Aluminiumoxid oder Molekularsieb, unterliegt einer natürlichen Alterung. Verschleiß durch Reibung und Beladung mit Verunreinigungen, die nicht durch die Regeneration entfernt werden können, mindern zusätzlich die Leistungsfähigkeit des Trockenmittels. Druckluft, beispielsweise, besteht aus einem Gemisch verschiedener Gase und Verunreinigungen. Neben Wasser finden sich häufig Kontaminationen durch Kohlenwasserstoffverbindungen, Abgase aus Verbrennungsprozessen, etwa CO2, CO, NOx, S02 oder auch Feststoffpartikel, zum Beispiel Staub. Diejenigen Stoffe, die sich nicht durch Filtration entfernen lassen, lagern sich an den ungesättigten Grenzflächen des Trockenmittels an und verringern dadurch dessen Aufnahmefähigkeit für Wasserdampf. Die Ablagerungen lösen sich zum Teil nicht bei der Regeneration. Bei der Desorption mit höheren Temperaturen können diese Verunreinigungen sogar zur Crackung oder zu einer Polymerisation organischer Moleküle führen. Die dauerhaft verbleibenden Rückstände beeinflussen maßgeblich die Aufnahmekapazität und die Leistungsfähigkeit des Trockenmittels - seine Standzeit verkürzt sich deutlich. Dies erfordert einen Wechsel des Adsorptionsbettes nach einer gewissen Zeit, wobei die Bestimmung des geeigneten Zeitpunkts für den Wechsel problematisch ist.

Es besteht zum Beispiel die Möglichkeit der Überwachung der Druckluftanlage mit einem Taupunktmessgerät. Nach einem Feuchtedurchbruch am Austritt des Adsorptionsbetts beginnt bereits der unerwünschte Feuchteeintrag in das Druckluftnetz. Ein Taupunktmessgerät registriert diesen Störfall und gibt eine entsprechende Meldung aus. Die Behebung des Schadens erfordert zusätzlich zu dem Austausch des verbrauchten Trockenmittels eine ungeplante, meist längere Stillstandszeit der Anlage und damit erhebliche Zusatzkosten.

Eine sicherere Alternative stellt der präventive Austausch des Trockenmittels dar. Dabei wird die Standzeit des Trockenmittels nach Betriebsstunden definiert oder orientiert sich an einem Grad des Trockenmittelabriebs. Dadurch werden allerdings weder der individuelle Auslastungsgrad noch die Belastung der Anlage mit Schadstoffen berücksichtigt. Dadurch wird die Gefahr von Funktionsstörungen meist nicht rechtzeitig erkannt. Zudem erfolgen die Austauschtermine nicht bedarfsorientiert, sondern nach einem fest vorgegebenen Intervall, es wird stets das gesamte Trockenmittel getauscht, wodurch maximale Kosten entstehen.

Des Weiteren ist der sogenannte Q-Test bekannt, der auf dem Umstand basiert, dass die Adsorption von Wasser einen exothermen Prozess darstellt, bei dem Wärme freigesetzt wird. Je aktiver das Trockenmittel agiert, desto mehr Wärme entsteht. Beim Q-Test wird das Trockenmittel befeuchtet und die Temperaturerhöhung gemessen. Die Testbedingungen, zum Beispiel die Umgebungseinflüsse, sind variabel und nur schwer reproduzierbar. Die Prüfung erfolgt naturgemäß stets unter atmosphärischem Druck. Zudem wird die Feuchtebelastung lediglich mit flüssigem Wasser vorgenommen - eine für tiefe Drucktaupunkte erforderliche Prüfung mit niedrigen relativen Feuchten findet nicht statt. Der Q-Test kann daher bestenfalls eine Tendenz für die quantitativen Eigenschaften des Trockenmittels anzeigen.

Ein gravimetrisches verfahren zur Bewertung der quantitativen Eigenschaften eines Trockenmittels ist in determination of Kinetics and Equilibria for Adsorption of Water on single Zeolite Particles by a Magnetic Suspension Balance" (W. Kwapinski, E. Tsotsas; Chemical Engineering and Technology; Bd. 27, Nr. 6, 1 Juni 2004) offenbart.

Eine Aufgabe der Erfindung besteht darin, ein Verfahren anzugeben, dass eine zuverlässige Bewertung der Standzeit eines Trockenmittels, insbesondere unter den Bedingungen des jeweiligen Einsatzes, erlaubt.

Die Aufgabe wird durch die Gegenstände der unabhängigen Ansprüche gelöst. In den Unteransprüchen sind jeweils be- vorzugte Ausführungsformen und vorteilhafte Weiterbildungen angegeben.

Das erfindungsgemäße Verfahren ist zur Bewertung eines Trockenmittels vorgesehen, wobei die Bewertung insbesondere auf einer Feststellung einer Leistungsfähigkeit des Trockenmittels beruht, also beispielsweise seiner Fähigkeit, Feuchtigkeit aufzunehmen, eines Grades der Verunreinigung des Trockenmittels und einer Abschätzung der voraussichtlichen Standzeit des Trockenmittels bis zu seinem Austausch. Dazu wird erfindungsgemäß mindestens eine Probe des Trockenmittels einem Prüfprozess unterzogen, bei welchem
- die Probe in mehreren aufeinander folgenden Beladungsschritten durch ein Gas mit einer relativen Feuchte beladen wird,
- die relative Feuchte des Gases bei jedem Beladungsschritt verändert wird,
- vor jedem Beladungsschritt eine Regeneration der Probe durchgeführt wird.

Zur Beladung wird die Probe von dem Gas relativer Feuchte durchströmt und nimmt dabei dessen Feuchtegehalt auf. Vor dem folgenden Beladungsschritt wird die Probe regeneriert. In einer komplexen Prüfanlage wird vorzugsweise eine während der turnusmäßigen Gerätewartung entnommene Trockenmittelprobe nach vollständiger Regeneration stufenweise mit einem festgelegten Feuchtespektrum beaufschlagt. Für die Leistungsfähigkeit des Trockenmittels relevante Prozessdaten des Prüfprozesses werden erfindungsgemäß ermittelt, also beispielsweise gemessen, abgelesen oder aufgezeichnet, so dass daraus vorteilhaft Rückschlüsse auf die Leistungsfähigkeit, insbesondere auf die verbleibende Standzeit des Trockenmittels gezogen werden können.

Bevorzugt erfolgen die Beladungsschritte unter gleichbleibenden Betriebsbedingungen, wobei die Betriebsbedingungen besonders bevorzugt entsprechend den Einsatzbedingung des Trockenmittels gewählt werden. Vorteilhaft ist, dass der Prüfprozess im Labor ohne Beeinflussung durch störende Umgebungsbedingungen durchgeführt werden kann. Die Beladungsschritte erfolgen vorteilhaft unter realen Betriebsbedingungen, das heißt, insbesondere unter einem bestimmten konstanten Betriebsdruck, gleichmäßiger Drucklufttemperatur und konstantem Volumenstrom des Gases. Es ist besonders vorteilhaft möglich, spezifische Betriebsbedingungen einer bestimmten Trocknungsvorrichtung zu simulieren. Dadurch wird es möglich, verlässliche Aussagen sowohl zum quantitativen wie zum qualitativen Zustand des Trockenmittels zu machen. Durch diese Kombination wird eine vorteilhaft hohe Prozesssicherheit einer Trocknungsvorrichtung erreicht und die Ermittlung des wirtschaftlich sinnvollsten Zeitpunkts für den Austausch des Trockenmittels ermöglicht. Durch eine exakte Lebensdauer-Prognose nach dem erfindungsgemäßen Verfahren wird es möglich, den Trockenmittelaustausch mit einer routinemäßigen künftigen Wartung der Trocknungsanlage abzustimmen. Der Wechsel kann dann vorteilhaft genau zu dem Wartungstermin erfolgen, der vor dem errechneten Zeitpunkt eines nötigen Trockenmittelersatzes liegt.

Gemäß einer bevorzugten Ausführungsform wird die Probe in jedem Beladungsschritt bis zum Eintritt einer Sättigung beladen. Weiterhin bevorzugt wird die relative Feuchte des Gases mit jedem Beladungsschritt gleichmäßig gesteigert, wobei die relative Feuchte des Gases bei einem der Beladungsschritte besonders bevorzugt 100 Prozent beträgt. Bevorzugt werden zwischen zwei und zehn Beladungsschritte durchgeführt, besonders bevorzugt fünf Beladungsschritte, insbesondere bei relativen Feuchten des Gases von 20 Prozent, 40 Prozent, 60 Prozent, 80 Prozent und 100 Prozent.

Gemäß einer weiteren bevorzugten Ausführungsform werden mehrere Proben des Trockenmittels dem Prüfprozess unterzogen, wobei die Proben verschiedenen Bereichen des Trockenmittels in einer Trocknungsvorrichtung entnommen werden. Dabei kommt bevorzugt eine spezielle Probeentnahmevorrichtung zum Einsatz, die die Aufnahme der benötigten Analysemenge in jeder beliebigen Höhe des Trockenmittels in einer Trocknungsvorrichtung erlaubt. Die Fähigkeit des Trockenmittels, Feuchtigkeit zu adsorbieren, reduziert sich dort am schnellsten, wo die Beladung mit Feuchtigkeit am größten ist, in der Regel am Eintritt des Gases, beispielsweise Druckluft, in das Trockenmittel. In Richtung eines Austrittsstutzens verläuft der Prozess des Verlustes der Fähigkeit, Feuchtigkeit zu adsorbieren, langsamer. Der Bereich des Austrittsstutzens der Trocknungsvorrichtung wiederum ist entscheidend für die Qualität des austretenden Gases. Dieser Bereich unterliegt einer natürlichen Alterung; maßgeblichen Einfluss auf die Geschwindigkeit des Alterungsprozesses haben die Anzahl der Regenerationszyklen sowie Qualität und Temperaturniveau der Desorptionsluft. Unabhängig davon, ob es sich um die Folge einer Verschlechterung der quantitativen oder der qualitativen Eigenschaften des Trockenmittels handelt, wird bei nachlassender Adsorptionsleistung der gewünschte Trocknungsgrad nicht mehr über den kompletten Adsorptionszyklus erzielt. Durch Aufnahme des Trocknungsmittels an den quantitativ und qualitativ bedeutsamen Punkten der Trocknungsvorrichtung kann diesen Risiken vorteilhaft gezielt entgegengewirkt werden.

Gemäß einer weiteren bevorzugten Ausführungsform werden dem Trockenmittel in zeitlichem Abstand Proben entnommen, welche dem Prüfprozess unterzogen werden, wobei besonders bevorzugt die für die Leistungsfähigkeit des Trockenmittels relevanten Prozessdaten zumindest teilweise aufgezeichnet und mit Prozessdaten vorhergehender Prüfprozesse an Proben des Trockenmittels verglichen werden. Die regelmäßige Durchführung der Bewertung des Trockenmittels stellt vorteilhaft keine zusätzliche Kosten- oder Zeitbelastung dar, wenn die Proben routinemäßig bei den allgemeinen Wartungsarbeiten im Rahmen eines bestehenden Serviceplans entnommen werden. Bevorzugt wird die Probe dem Trockenmittel einer Trocknungsvorrichtung für Druckluft entnommen. Die für die Leistungsfähigkeit des Trockenmittels relevanten Prozessdaten umfassen bevorzugt mindestens einen der Parameter
- Feuchtigkeitsmenge, welche die Probe passiert hat,
- relative Feuchte des Gases nach dem Durchströmen der Probe,
- Temperatur des Gases nach dem Durchströmen der Probe und
- Zeit bis zum Erreichen eines bestimmten Beladungsgrads der Probe, insbesondere bis zur Sättigung der Probe.

Weiterhin bevorzugt wird eine Probe des Trockenmittels dem Prüfprozess unterzogen, bevor das Trockenmittel erstmals zur Trocknung eingesetzt wird, wobei die Prozessdaten dieses Prüfprozesses als Referenzdaten dienen. Der Fachmann erkennt, dass diese Prüfung ebenso mit einer beliebigen unbenutzten Probe aus derselben Charge eines Trockenmittels erfolgen kann.

Ein weiterer Gegenstand der Erfindung ist eine Prüfvorrichtung zur Durchführung des zuvor beschriebenen Verfahrens. Vorzugsweise weist die Prüfvorrichtung einen Probenbehälter für die Probe auf, welcher von einem Gas durchströmbar ist, wobei eine Vorrichtung zur Regelung von Druck, Temperatur, Volumenstrom und relativer Feuchte des Gases vorgesehen ist und wobei Messvorrichtungen zur Bestimmung von für eine Leistungsfähigkeit des Trockenmittels relevanten Prozessdaten des Prüfprozesses vorgesehen sind.

Ein weiterer Gegenstand der Erfindung ist ein Verfahren zum Betrieb einer Trocknungsvorrichtung mit einem Trockenmittel, insbesondere für eine Druckluftanlage, wobei ein Zeitpunkt für ei- nen Austausch des Trockenmittels anhand einer Leistungsfähigkeit des Trockenmittels bestimmt wird, wobei die Leistungsfähigkeit des Trockenmittels durch das zuvor beschriebene Verfahren ermittelt wird. Ein Vorteil des Verfahrens besteht darin, dass der Austausch des Trockenmittels am Bedarf orientiert erfolgt.

Nachfolgend wird die Erfindung anhand von Zeichnungen näher erläutert, wobei diese die erfindungsgemäßen Verfahren ebenso illustrieren, wie die erfindungsgemäße Vorrichtung. Die Ausführungen sind beispielhaft und schränken den allgemeinen Erfindungsgedanken nicht ein.

### Es zeigen

Figur 1 eine Darstellung der Erschöpfung eines Trockenmittels anhand eines Diagramms;
Figur 2 ein Ausführungsbeispiel für den Aufbau eines Prüfprozesses gemäß dem erfindungsgemäßen Verfahren bzw. der erfindungsgemäßen Vorrichtung in einem schematischen Schaltbild;
Figur 3 einen beispielhaften, aufgezeichneten Datensatz von Prozessdaten eines Prüfprozesses gemäß Figur 2;

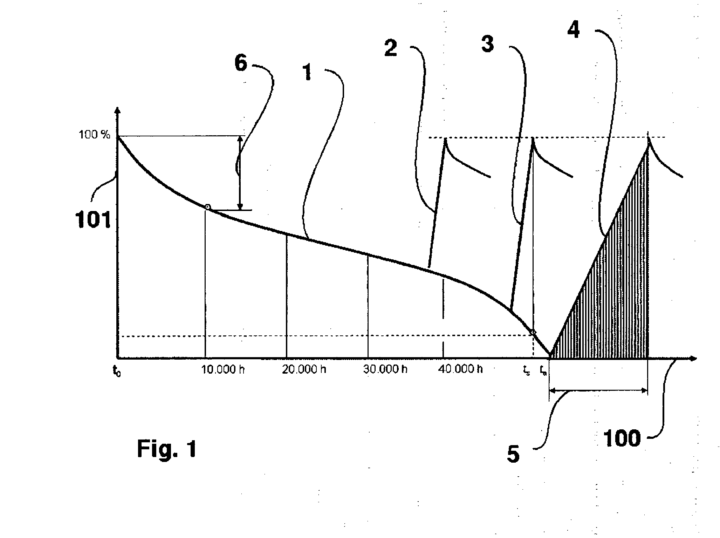

In der Figur 1 ist in einem Diagramm die Erschöpfung eines Trockenmittels dargestellt. Der Abnutzungsvorrat in Prozent ist auf der Achse 101 als Maß der Leistungsfähigkeit des Trockenmittels über der Nutzungsdauer auf der Achse 100 abgetragen, wodurch sich die Abbaukurve 1 ergibt. Der Abstand 6 zu 100 Prozent zu Beginn der Nutzung im Zeitpunkt t₀ bezeichnet die aktuelle Zustandsabweichung des Trockenmittels.

Der Zeitpunkt eines notwendigen Wechsels des Trockenmittels kann durch eine Messung der Restfeuchte in dem getrockneten Druckgas, z.B. durch eine Drucktaupunktmessung erfolgen. Ist der Drucktaupunkt zu hoch, kommt es zu einen Durchbruch zum Schadenszeitpunkt tₛ, es ist eine Betriebsunterbrechung notwendig und es kommt zu einer Ausfallzeit 5. Die zeitaufwändige Instandsetzung nach Ausfall ist mit der Kurve 4 dargestellt. Besser ist eine präventive Wartung des Trocknungsmittels, also rechtzeitige Vorbereitung und Durchführung des Wechsels gemäß Kurve 2, sodass man diesen in einer Pausenzeit der Anlage durchführen kann, z.B. am Wochenende. Verbreitet ist auch eine Probennahme des Trocknungsmittels und Eingabe in Wasser. Dabei nimmt die Probe Wasser auf und entwickelt Wärme in dem exothermen Prozess. Die gemessene Temperatur gibt ein Indiz auf den Zustand des Trockenmittels. Diese Methode ist relativ ungenau. Das Trocknungsmittel könnte sehr viel länger noch aktiv sein, vielleicht aber auch kurz nach positiver Messung einbrechen.

Das erfindungsgemäße Verfahren testet das Trocknungsmittel praxisorientiert durch Befahren einer Probe mit einem realitätsnahen Probegas, unter Druck und mit Wasserdampfbeladung. Dadurch wird ein zustandsorientierter Austausch des Trockenmittels gemäß Kurve 3 ermöglicht.

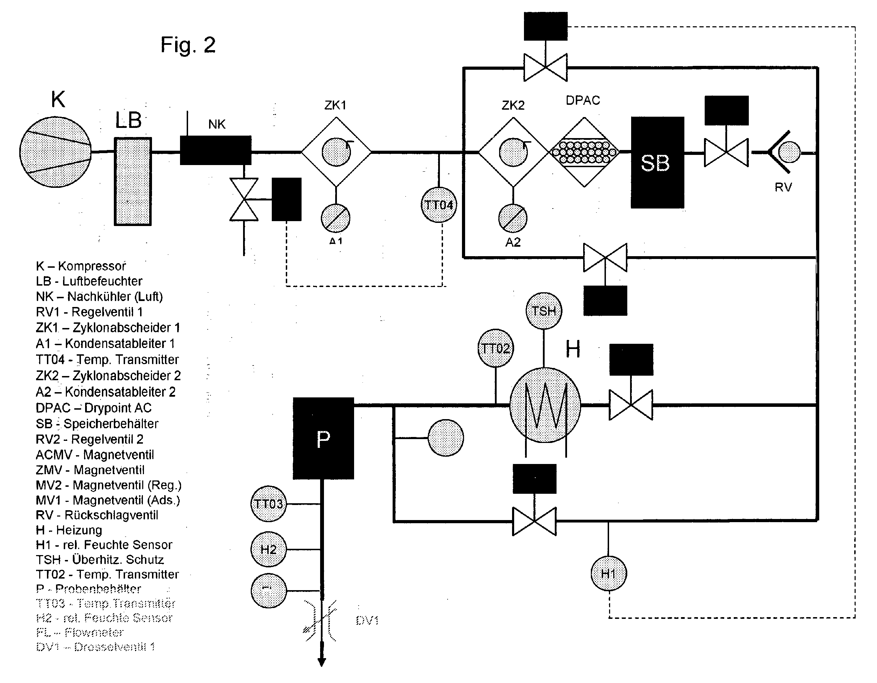

In der Figur 2 ist ein Ausführungsbeispiel einer erfindungsgemäßen Prüfvorrichtung in einem schematischen Schaltbild dargestellt, das ebenso zur Illustration des erfindungsgemäßen Verfahrens geeignet ist. Eine Trockenmittelprobe in dem Probenbehälter P wird in verschiedenen Schritten, unter immer gleichen Betriebsbedingungen, insbesondere Druck, Temperatur und Volumenstrom, mit relativen Feuchten von 20 Prozent, 40 Prozent, 60 Prozent, 80 Prozent, 100 Prozent, vorzugsweise bis zur Sättigung beladen. Vor jedem Beladungsschritt erfolgt eine Regeneration der Probe. Die Prozessdaten werden aufgezeichnet und können mit anderen Daten grafisch und mathematisch verglichen werden.

Die gewonnen Daten sind nur vergleichbar wenn die Bedingungen bei der Durchführung des Prüfprozesses gleich sind. Um das zu gewährleisten wird die Temperatur, der Volumenstrom und der Druck konstant eingestellt. Eine Temperatur in Strömungsrichtung hinter einem Kompressor K wird mittels eines Sensors TT04 gemessen. Weicht die Temperatur des Probegases von der für den Prüfprozess vorgesehenen Wert ab, wird das Regelventil RV 1 über eine Steuerung aktiviert. Es erfolgt über das Regelventil RV 1 eine Mehr- oder Minderzufuhr von Kühlwasser zum Nachkühler NK.

Die Prüfvorrichtung arbeitet beispielsweise mit einem Betriebsdruck von 6 bar. Die vom Kompressor K kommende warme Druckluft wird über den Luftbefeuchter LB in der Jahreszeit, in der keine Sättigung der Druckluft durch Wasserdampf aus der Umgebung möglich ist, zusätzlich beladen. Hinter dem Nachkühler NK und einem ersten Zyklonabscheider ZK1 mit Kondensatabscheider A1 hat die Luft 100 Prozent relative Feuchte bei der einge- stellten Temperatur. Mit einem Drosselventil DV1 wird der Volumenstrom und der Druck konstant gehalten.

Der Prüfprozess umfasst beispielsweise zwölf Schritte, wobei die ungeradzahligen Schritte jeweils Regenerationsschritte sind und geradzahlige Schritte Adsorptions- oder Beladungsschritte.

In Schritt 1 erfolgt zunächst eine Regeneration der Probe. Um die Probe zu regenerieren wird der Volumenstrom über einen zweiten Zyklonabscheider ZK2 mit Kondensatableiter A2 in einen Adsorptionstrockner DPAC geleitet und von dort weiter in einen Speicherbehälter SB. Magnetventile ACMV und MV2 sind geöffnet. Ein Rückschlagventil RV verhindert ein Rückströmen von Luft in den Speicherbehälter SB. In einer Heizung H wird die Luft solange erwärmt bis an einem Temperaturtransmitter TT02 ein voreingestellte Wert erreicht wird. Ist der Wert erreicht, wird die Heizung H abgeschaltet bis die Temperatur unter die eingestellte Temperatur fällt, dann wird die Heizung H wieder eingeschaltet. Eine Überhitzung wird durch den Transmitter TT02 und ein Temperaturthermostat TSH verhindert. Der erhitzte Luftstrom gelangt nun in den Probenbehälter P wo das Trockenmittel der Wärme ausgesetzt und so getrocknet wird. Mit einem Temperaturtransmitter TT03 wird eine Austrittstemperatur ermittelt. Sobald ein voreingestellter Wert überschritten wird, wird das Heizen beendet und es folgt ein Kühlen der Probe, was von der Abfolge mit dem Heizen vergleichbar ist, wobei natürlich die Heizung H abgeschaltet bleibt. Die Probe wird solange gekühlt, bis die Lufttemperatur an dem Temperaturtransmitter TT03 gleich der Lufttemperatur an dem Temperaturtransmitter TT04 ist.

In Schritt 2 erfolgt eine Beladung bzw. Adsorption mit 20 Prozent relativer Feuchte. Als Basisluft dient hier die Stecke von dem zweiten Zyklonabscheider ZK2 bis zu dem Magnetventil ACMV. Hier hat die Luft einen Taupunkt von ca.-50° C und eine relative Feuchte von 0,1 bis 0,3 Prozent. Um die Regelfeuchte zu erreichen, wird über ein Regelventil RV2 solange feuchte Luft beigemischt, bis an einem Sensor H1 für die relative Feuchte die gewünschten 20 Prozent erreicht sind. Über diesen Regelkreis wird die relative Feuchte konstant gehalten. Die nun gemischte Luft wird über ein Magnetventil MV1 bei während der Adsorption geschlossenem Ventil MV2 in den Probenbehälter P geleitet. Ein Temperatursensor TT05 misst die tatsächliche Eintrittstemperatur und dient dazu, in Verbindung mit der Eintrittsfeuchte und dem Volumenstrom, die Wasserbeladung des Trockenmittels zu berechnen. Hinter der Probe werden ebenfalls die Temperatur TT03 und die relative Feuchte mit einem Sensor H2 gemessen. Hiermit wird die Wassermenge berechnet die das Trockenmittel nicht aufhalten konnte. Sobald der vom Sensor H2 gemessene Wert der relativen Feuchte gleich dem Wert der relativen Feuchte am Sensor H1 ist, ist die Probe gesättigt und der Beladungsschritt wird beendet.

Es folgt wieder ein Regenerationsschritt, wie oben zu Schritt 1 beschrieben. Das betrifft die Schritte 3, 5, 7 und 9. Die Beladungsschritte 4, 6 und 8 entsprechen ihrerseits Schritt 2, wobei als Wert für die relative Feuchte 40, 60 bzw. 80 Prozent eingestellt werden. Beladungsschritt 10 unterscheidet sich davon geringfügig. Da als Regelfeuchte 100 Prozent vorgesehen sind, ist das Magnetventil ACMV geschlossen und das Magnetventil ZMV geöffnet. Auch das Regelventil RV2 ist geschlossen. Ansonsten ist die weitere Abfolge gleich den vorangegangenen Beladungsschritten.

In einem Schritt 11 wird die Probe noch einmal regeneriert, was im Wesentlichen dazu dient, die Anlage wieder frei von Feuchtigkeit zu fahren um für die nächste Probe bereit zu sein. Nach Beenden des Schritts 11 wird die Anlage druckfrei gesetzt und schaltet sich ab.

Auf einem an der Anlage angeschlossenen Computer (nicht dargestellt) ist eine Software installiert, über die der Datenfluss geregelt wird. Nach dem Start der Software trägt beispielsweise ein Bediener ein, ob es sich bei der Probe um eine Neuprobe (Chargennummer des Trockenmittels) oder um eine in Nutzung befindliche Probe (Anlagenseriennummer oder Behälterseriennummer) handelt. Weiterhin wird der Trockenmitteltyp eingetragen. In einem Kommentarfeld können noch zusätzliche Informationen eingetragen werden, wie zu Beispiel aus welche Behälterzone die Probe genommen wurde oder ein Kundenname oder Lieferant des Trockenmittels. Die Software vergibt vorzugsweise automatisch eine einmalige Probennummer. Über ein Schaltfeld wird, nachdem alle Informationen eingetragen wurden, die Anlage gestartet. Nun empfängt die Software, vorzugsweise in einem Intervall von 10 Sekunden, jeweils einen Datensatz von der Anlage. Ein Datensatz enthält beispielsweise den jeweiligen Wert der Temperatursensoren TT02, TT03, TT04 und TT05, der Sensoren für die relative Feuchte H1 und H2, sowie eines Durchflussmengenmessers oder Flowmeters FL.

Nach Empfang des Datensatzes wird dieser beispielsweise in eine SQL-Datenbank eingetragen. Hat die Prüfvorrichtung den letzten Schritt (Schritt 11) abgeschlossen, sendet diese, bevor sie sich abschaltet, ein Signal an die Software, um diese ebenfalls zu beenden.

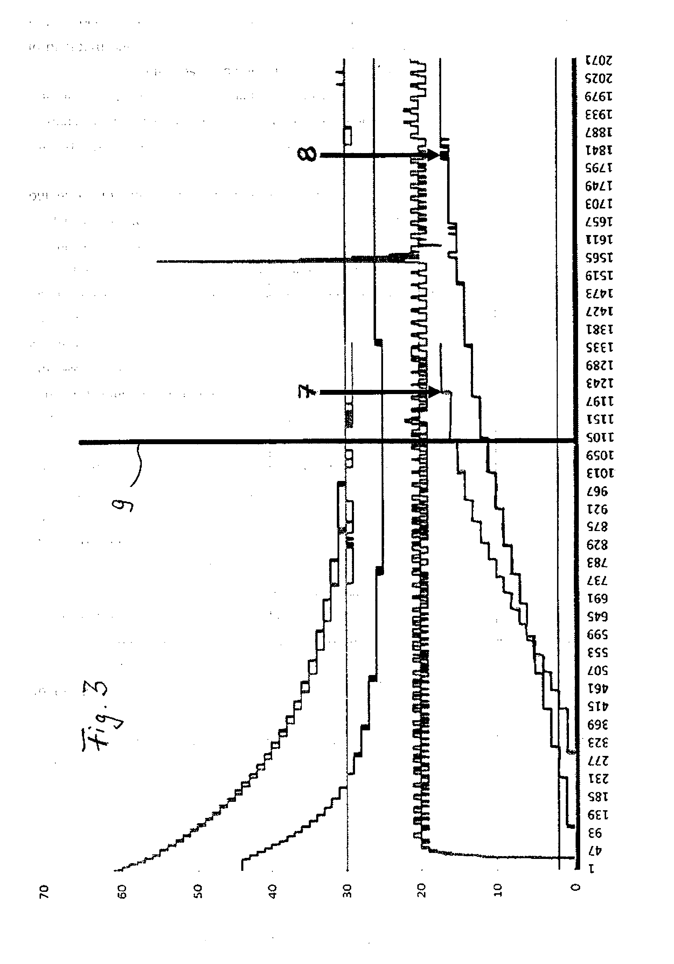

Eine graphische Auswertung der Datensätze eines Beladungsschritts mit einem alten Trockenmittel von geringer Leistungsfähigkeit (Kurve 7) und einem neuen Trockenmittel mit hoher Leistungsfähigkeit (Kurve 8) ist in der Figur 3 beispielhaft dargestellt. Eine Verschleißgrenze 9 bezeichnet einen Zeitpunkt, vor dem die Sättigung der Probe nicht erreicht werden darf. Zuvor ist ein Austausch des Trockenmittels nötig. Durch einen Vergleich der aufgezeichneten Daten zuvor durchgeführter Prüfprozesse mit Proben eines Trockenmittels, lässt sich dessen Erschöpfung durch eine Veränderung der aufgezeichneten Kurve nachvollziehen und so abschätzen, wann das Trockenmittel bereits vor der Verschleißgrenze gesättigt sein wird. Der Austausch ist dementsprechend für die nächste, vor dem Zeitpunkt liegende Wartung zu planen.

## Patentansprüche

1. Verfahren zur Bewertung eines Trockenmittels,
wobei mindestens eine Probe des Trockenmittels einem Prüfprozess unterzogen wird, bei welchem
- die Probe in mehreren aufeinander folgenden Beladungsschritten durch ein Gas mit einer relativen Feuchte beladen wird,
- die relative Feuchte des Gases bei jedem Beladungsschritt verändert wird,
- vor jedem Beladungsschritt eine Regeneration der Probe durchgeführt wird,
wobei für eine Leistungsfähigkeit des Trockenmittels relevante Prozessdaten des Prüfprozesses ermittelt werden.

2. Verfahren nach Anspruch 1,
**dadurch gekennzeichnet,**
**dass** die Beladungsschritte und die anschließende Regeneration unter gleichbleibenden Betriebsbedingungen erfolgen.

3. Verfahren nach Anspruch 2,
**dadurch gekennzeichnet,**
**dass** die Betriebsbedingungen entsprechend den Einsatzbedingung des Trockenmittels gewählt werden.

4. Verfahren nach einem der vorhergehenden Ansprüche,
**dadurch gekennzeichnet,**
**dass** die Probe in jedem Beladungsschritt bis zum Eintritt einer Sättigung beladen wird.

5. Verfahren nach einem der vorhergehenden Ansprüche,
**dadurch gekennzeichnet,**
**dass** die relative Feuchte des Gases mit jedem Beladungsschritt gleichmäßig gesteigert wird.

6. Verfahren nach einem der vorhergehenden Ansprüche,
**dadurch gekennzeichnet,**
**dass** die relative Feuchte des Gases bei einem der Beladungsschritte 100 Prozent beträgt.

7. Verfahren nach einem der vorhergehenden Ansprüche,
**dadurch gekennzeichnet,**
**dass** zwischen zwei und zehn Beladungsschritte durchgeführt werden.

8. Verfahren nach einem der vorhergehenden Ansprüche,
**dadurch gekennzeichnet,**
**dass** mehrere Proben des Trockenmittels dem Prüfprozess unterzogen werden, wobei die Proben verschiedenen Bereichen des Trockenmittels in einer Trocknungsvorrichtung entnommen werden.

9. Verfahren nach einem der vorhergehenden Ansprüche,
**dadurch gekennzeichnet,**
**dass** dem Trockenmittel in zeitlichem Abstand Proben entnommen werden, welche dem Prüfprozess unterzogen werden.

10. Verfahren nach einem der vorhergehenden Ansprüche,
**dadurch gekennzeichnet,**
**dass** die für die Leistungsfähigkeit des Trockenmittels relevanten Prozessdaten zumindest teilweise aufgezeichnet und mit Prozessdaten vorhergehender Prüfprozesse an Proben des Trockenmittels verglichen werden.

11. Verfahren nach einem der vorhergehenden Ansprüche,
**dadurch gekennzeichnet,**
**dass** die für die Leistungsfähigkeit des Trockenmittels relevanten Prozessdaten mindestens einen der Parameter
- Feuchtigkeitsmenge, welche die Probe passiert hat,
- relative Feuchte des Gases nach dem Durchströmen der Probe,
- Temperatur des Gases nach dem Durchströmen der Probe und
- Zeit bis zum Erreichen eines bestimmten Beladungsgrads der Probe, insbesondere bis zur Sättigung der Probe,
umfassen.

12. Verfahren nach einem der vorhergehenden Ansprüche,
**dadurch gekennzeichnet,**
**dass** eine Probe des Trockenmittels dem Prüfprozess unterzogen wird, bevor das Trockenmittel zur Trocknung eingesetzt wird, wobei die Prozessdaten dieses Prüfprozesses als Referenzdaten dienen.

13. Verfahren nach einem der vorhergehenden Ansprüche,
**dadurch gekennzeichnet,**
**dass** die Probe dem Trockenmittel einer Trocknungsvorrichtung für Druckluft entnommen wird.

## Claims

1. A method for evaluating a drying agent,
wherein at least one sample of the drying agent is subjected to a testing process, in which
- the sample is charged in several successive charging steps with a relative humidity by means of a gas,
- the relative humidity of the gas is changed in each charging step,
- a regeneration of the sample is carried out prior to each charging step,
wherein process data of the testing process relevant for the efficiency of the drying agent are determined.

2. The method according to claim 1,
**characterised in that**
the charging steps and the subsequent regeneration take place under constant operating conditions.

3. The method according to claim 2,
**characterised in that**
the operating conditions are selected so as to correspond to the conditions of use of the drying agent.

4. The method according to anyone of the preceding claims,
**characterised in that**
the sample is charged in each charging step until a saturation occurs.

5. The method according to anyone of the preceding claims,
**characterised in that**
the relative humidity of the gas is increased uniformly in each charging step.

6. The method according to anyone of the preceding claims,
**characterised in that**
the relative humidity of the gas in one of the charging steps is 100 per cent.

7. The method according to anyone of the preceding claims,
**characterised in that**
between two and ten charging steps are carried out.

8. The method according to anyone of the preceding claims,
**characterised in that**
several samples of the drying agent are subjected to the testing process, with the samples being taken from different regions of the drying agent in a drying device.

9. The method according to anyone of the preceding claims,
**characterised in that**
samples, which are subjected to the testing process, are taken from the drying agent at intervals in time.

10. The method according to anyone of the preceding claims,
**characterised in that**
the process data relevant for the efficiency of the drying agent are recorded at least in part and compared to process data of previous testing processes on samples of the drying agent.

11. The method according to anyone of the preceding claims,
**characterised in that**
the process data relevant for the efficiency of the drying agent include at least one of the parameters
- quantity of humidity which has passed the sample,
- relative humidity of the gas after flowing through the sample,
- temperature of the gas after flowing through the sample, and
- time until a certain charging level of the sample is reached, particularly until saturation of the sample.

12. The method according to anyone of the preceding claims,
**characterised in that**
a sample of the drying agent is subjected to the testing process prior to the drying agent being used for drying, with the process data of this testing process serving as reference data.

13. The method according to anyone of the preceding claims,
**characterised in that**
the sample is taken from the drying agent of a drying device for compressed air.

## Revendications

1. Procédé d'évaluation d'un produit desséchant,
dans lequel au moins un échantillon dudit produit desséchant est soumis à un processus de contrôle dans lequel
- ledit échantillon est chargé, dans plusieurs étapes de chargement successives, par un gaz ayant une humidité relative,
- l'humidité relative du gaz est modifiée à chaque étape de chargement,
- une régénération de l'échantillon est effectuée avant chaque étape de chargement,
dans lequel on détermine des données de processus du processus de contrôle pertinentes pour un rendement dudit produit desséchant.

2. Procédé selon la revendication 1, **caractérisé par le fait que** les étapes de chargement et la régénération subséquente sont réalisées dans des conditions de service constantes.

3. Procédé selon la revendication 2, **caractérisé par le fait que** les conditions de service sont choisies selon les conditions d'utilisation du produit desséchant.

4. Procédé selon l'une quelconque des revendications précédentes, **caractérisé par le fait que**, dans chaque étape de chargement, ledit échantillon est chargé jusqu'à ce qu'une saturation soit atteinte.

5. Procédé selon l'une quelconque des revendications précédentes, **caractérisé par le fait que** l'humidité relative du gaz est augmentée uniformément avec chaque étape de chargement.

6. Procédé selon l'une quelconque des revendications précédentes, **caractérisé par le fait que** l'humidité relative du gaz est de 100 pourcents dans l'une des étapes de chargement.

7. Procédé selon l'une quelconque des revendications précédentes, **caractérisé par le fait que** deux à dix étapes de chargement sont effectuées.

8. Procédé selon l'une quelconque des revendications précédentes, **caractérisé par le fait que** plusieurs échantillons du produit desséchant sont soumis au processus de contrôle, les échantillons étant prélevés dans des zones différentes du produit desséchant dans un dispositif de séchage.

9. Procédé selon l'une quelconque des revendications précédentes, **caractérisé par le fait que** des échantillons sont prélevés à un intervalle de temps dans le produit desséchant, qui sont soumis au processus de contrôle.

10. Procédé selon l'une quelconque des revendications précédentes, **caractérisé par le fait que** les données de processus pertinentes pour le rendement du produit desséchant sont enregistrées au moins en partie et sont comparées à des données de processus de processus de contrôle précédents réalisés sur des échantillons du produit desséchant.

11. Procédé selon l'une quelconque des revendications précédentes, **caractérisé par le fait que** les données de processus pertinentes pour le rendement du produit desséchant comprennent au moins l'un des paramètres
- quantité d'humidité qui a traversé l'échantillon,
- humidité relative du gaz après avoir traversé l'échantillon,
- température du gaz après avoir traversé l'échantillon et
- le temps jusqu'à ce qu'un degré déterminé de chargement de l'échantillon soit atteint, en particulier jusqu'à la saturation de l'échantillon.

12. Procédé selon l'une quelconque des revendications précédentes, **caractérisé par le fait qu'**un échantillon du produit desséchant est soumis au processus de contrôle avant que le produit desséchant soit mis en ceuvre pour le séchage, les données de processus de ce processus de contrôle servant de données de référence.

13. Procédé selon l'une quelconque des revendications précédentes, **caractérisé par le fait que** ledit échantillon est prélevé dans le produit desséchant d'un dispositif de séchage pour air comprimé.
